# EUROPEAN PATENT APPLICATION

(11) **EP 1 935 723 A1**
(43) Date of publication of application: **25.06.2008**
(21) Application number: 06766915.0
(22) Date of filing: 19.06.2006
(51) Int. Cl.: B60R 16/02, G06F 3/041, G09G 3/20

(54) **IN-VEHICLE DISPLAY DEVICE**

(30) Priority: 20.09.2005 JP 2005272951
(71) Applicant: FUJITSU TEN LIMITED, Kobe-shi Hyogo 652-8510 (JP)
(72) Inventor: KONISHI, Takamasa, Hyogo_6528510 (JP); TANAKA, Shogo, Hyogo 6528510 (JP); HAMAOKA, Hirofumi, Hyogo 6528510 (JP); KAMOTO, Mitsuhiro, Hyogo 6528510 (JP); NAKANO, Masahiko, Hyogo 6528510 (JP)
(74) Representative: Ward, James Norman
(86) International application number: PCT/JP2006/312251
(87) International publication number: WO 2007/034602

(57) **Abstract**

The present invention provides an in-vehicle display apparatus including a switching button 151 that switches between a single display mode displaying the same images on the basis of a single image source on first and second screens, and a dual display mode displaying D-seat and P-seat images on the basis of different image sources or the same image source on the first and second screens, respectively. Therefore, according to user's request, it is possible to switch between a case where the same images are displayed on the first and second screens, and a case where the different images are displayed on the first and second screens, respectively.

## Description

### TECHNICAL FIELD

The present invention relates to an in-vehicle display apparatus, and in particular to an in-vehicle display apparatus which can display different images from respective different directions on a common display screen.

### BACKGROUND ART

There has been known a so-called dual-view display which can display different visible images from respective different directions on a common (or single) display screen. For example, the dual-view display is provided with a parallax barrier in front of a liquid crystal panel, and the parallax barrier sorts directions of movement of light from a backlight every one pixel, and hence different information (i.e., images) can be displayed on the right and left of the display screen (e.g. see Document 1). By mounting such a display apparatus on a vehicle, while a driver watches a navigation image, a passenger of a front passenger's seat can watch other image such as a television program.

Document 1: Japanese Patent Application Publication No. 2005-78080

### DISCLOSURE OF THE INVENTION

### PROBLEMS TO BE SOLVED BY THE INVENTION

However, in such a display apparatus, there is a case where the driver and the passenger of the front passenger's seat want to watch the same image. For example, it is a case where the driver and the passenger of the front passenger's seat watch a television program while the driver is not driving. Such a display apparatus displays the same images on respective right and left sides of the screen with a single image source, so that the driver and the passenger of the front passenger's seat can watch the same images. It is necessary for this display apparatus to be capable of switching between a case where different images are displayed on the right and left sides of the screen and a case where the same images are displayed on the right and left sides of the screen.

When the different images are displayed on the right and left sides of the screen, the passenger of the front passenger's seat cannot watch the image displayed in the driver side, and the driver cannot watch the image displayed in the front passenger's seat side. Therefore, the display apparatus has a problem that the driver and the passenger of the front passenger's seat cannot grasp whether the images watched by both of them are the same or different.

Such a display apparatus is provided with an operation portion for providing an operating instruction, and when the different images are displayed on the right and left sides of the screen, it is necessary to be provided with operation portions for providing respective operating instructions relating to right and left separate images. However, for the size of the display portion, there is a case where the operation portions cannot be individually provided. In this case, it is necessary to execute operation relating to the right and left images with a common operation portion.

The present invention has been made in view of the above described problems, and it is an object of the present invention to provide an in-vehicle display apparatus which displays first and second images on first and second screens that are formed on a common display portion and are capable of being watched from respective different directions, and which can switch between a case where the same images are displayed on the first and second screens and a case where different images are displayed on the first and second screens according to user's request. Further, it is an object of the present invention to provide an in-vehicle display apparatus which can operate only any one of the first and second images even when a common means provides an operating instruction relating to the first image or the second image.

### MEANS FOR SOLVING THE PROBLEMS

The above object is achieved by an in-vehicle display apparatus including: a display control means that causes first and second images to be displayed on a common display unit, the first and second images being capable of being watched from first and second viewing directions, respectively; a display mode switching means that switches between a single display mode displaying images on the basis of a common image source on the display unit, and a dual display mode displaying the first and second images on the basis of different image sources or the same image source on the display unit so that the first and second images are capable of being watched from the first and second viewing directions, respectively; and an operating mode switching means that switches between a first operating mode which permits operation with respect to the first image, and a second operating mode which permits operation with respect to the second image; wherein the display mode switching means and the operating mode switching means includes a common operating unit.
With this configuration, the in-vehicle display apparatus includes the display mode switching means, and it is therefore possible to switch between the case where the same images are displayed on the first and second screens, and the case where the different or the same images are displayed on the first and second screens, according to user's request.
Further, the in-vehicle display apparatus includes the operating mode switching means, and it is therefore possible to operate only any one of the first and second images even when a common means provides an operating instruction relating to a first image or a second image. As a result, the user can operate only a desired image.
Moreover, since the display mode switching means and the operating mode switching means includes the common operating unit, the user can easily switch between a plurality of modes with the single operating unit.

In the above configuration, there may be employed a configuration such that the display mode switching means switches between the single display mode and the dual display mode when a time period for operation to the operating unit is more than a given time period, and the operating mode switching means switches between the first operating mode and the second operating mode when the time period for operation is less than the given time period in the dual display mode.
With this configuration, it is possible to easily switch between a plurality of modes with the single operating unit.

In the above configuration, there may be employed a configuration such that the first viewing direction is a driver's seat direction, and the second viewing direction is a front passenger's seat direction.

In the above configuration, there may be employed a configuration such that the first image is a navigation image, and the second image is a television image.

In the above configuration, there may be employed a configuration such that the given time period is 0.8 seconds.

In the above configuration, there may be employed a configuration further including a lighting portion that changes a lighting state depending on a set type of the single display mode and the dual display mode and/or a set type of the first operating mode and the second operating mode.
With this configuration, the user can easily distinguish the states of the modes.

In the above configuration, there may be employed a configuration such that the lighting portion is formed integrally with the display mode switching means and/or the operating mode switching means. With this configuration, the user can easily grasp the position of the display mode switching means and/or the operating mode switching means.

In the above configuration, there may be employed a configuration such that the lighting portion is turned on, turned off, or blinked depending on a set type of the single display mode and the dual display mode and/or a set type of the first operating mode and the second operating mode.
With this configuration, the user confirms that the state of the lighting portion is a turning-on state, a turning-off state, or a blinking state, and the user therefore can distinguish the states of the modes in detail.

In the above configuration, there may be employed a configuration such that the lighting portion is turned off when a setting mode is the single display mode, the lighting portion is turned on when the setting mode is the first operating mode, the lighting portion is blinked when the setting mode is the second operating mode.

In the above configuration, there may be employed a configuration such that brightness of the lighting portion during lighting is automatically adjusted according to brightness in a vehicle.
With this configuration, the user can easily grasp the position of the lighting portion.

### EFFECTS OF THE INVENTION

According to the present invention, in an in-vehicle display apparatus which displays first and second images on first and second screens that are formed on a common display means and are capable of being watched from respective different directions, it is possible to switch between a case where the same images are displayed on the first and second screens and a case where different images are displayed on the first and second screens according to user's request. Further, it is possible to operate only any one of the first and second images even when a common means provides an operating instruction relating to the first image or the second image.

### BRIEF DESCRIPTION OF THE DRAWINGS

Preferred exemplary embodiments of the present invention will be described in detail with reference to the following drawings, wherein:
FIG. 1 is a view illustrating a basic configuration of a display apparatus in accordance with an exemplary embodiment of the present invention;
FIG. 2 is a perspective view showing an example in which the display apparatus is applied to a vehicle;
FIG. 3 is a functional block diagram of the display apparatus;
FIG. 4 is a functional block diagram showing a configuration of a controller;
FIG. 5 is a functional block diagram of first and second image quality adjusting circuits;
FIG. 6 is a functional block diagram of an image outputting portion;
FIG. 7 is a view illustrating a cross-sectional configuration of a display portion;
FIG. 8 is a front view of a liquid crystal panel;
FIG. 9 is a circuit diagram of a TFT substrate;
FIGs. 10A and 10B are views describing the principles of operation of liquid crystal;
FIG. 11 is a view describing a function of the liquid crystal as a shutter;
FIG. 12 is a perspective view of an in-vehicle display apparatus;
FIGs. 13A and 13B are views describing a single display mode and a dual display mode;
FIG. 14 is a flowchart showing an example of a startup process of the in-vehicle display apparatus executed by a controller;
FIG. 15 is a flowchart showing an example of a mode switching process executed by the controller;
FIG. 16 is a flowchart showing a first variation of the mode switching process executed by the controller;
FIG. 17 is a flowchart showing a second variation of the mode switching process executed by the controller;
FIGs. 18A to 18C are views describing operation to the in-vehicle display apparatus when a driving restriction process is executed;
FIG. 19 is a flowchart showing an example of a brightness adjusting process of a switching button executed by the controller;
FIG. 20 is a front view of a display portion 100A of the in-vehicle display apparatus in accordance with the first variation; and
FIG. 21 is a front view of a display portion 100B of the in-vehicle display apparatus in accordance with the second variation.

### BEST MODE FOR CARRYING OUT THE INVENTION

A description will now be given, with reference to the accompanying drawings, of best modes for carrying out the present invention.

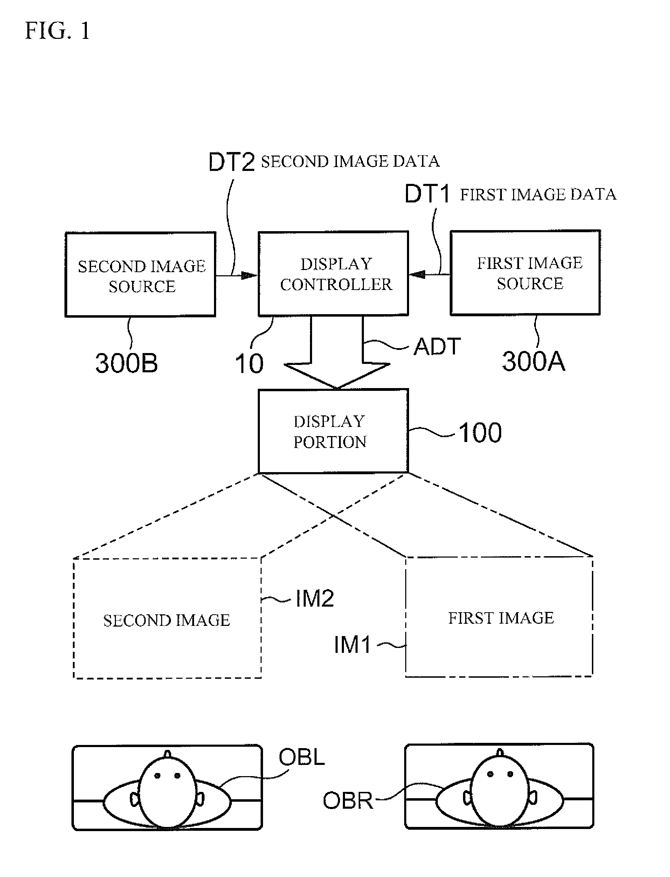

FIG. 1 is a view illustrating a basic configuration of a dual-view in-vehicle display apparatus in accordance with an exemplary embodiment of the present invention.
Referring now to FIG. 1, an in-vehicle display apparatus includes a display controller 10 that serves as a display control means, and a display portion 100 as display means. To the display controller 10, image data DT1 is supplied from a first image source 300A that servers as a supply source, and at the same time, image data DT2 is also supplied from a second image source 300B that servers as a supply source. Then, image data ADT, which is composed of the first image data DT1 and the second image data DT2, is output to the common display portion 100. The configuration of the display controller 10 will be described later in detail.
The first image source 300A and the second image source 300B are respectively composed of a camera, TV receiver, DVD reproducing portion, HD reproducing portion, navigation portion, and the like, as will be described later.

The display portion 100 includes: a liquid crystal panel; a backlight; a parallax barrier; and the like, as will also be described later. A first image IM1 based on the first image data DT1 and a second image IM2 based on the second image data DT2 are displayed on a common display screen so that an observer OBR can watch the first image IM1 from a right-hand direction and an observer OBL can watch the second image IM2 from a left-hand direction. That is, the display portion 100 is provided with a visible screen (first screen) from the side of the observer OBR and a visible screen (second screen) from the side of the observer OBL, and the first image IM1 and the second image IM2 are displayed on these screens, respectively. The configuration of the display portion 100 will also be described later in detail.

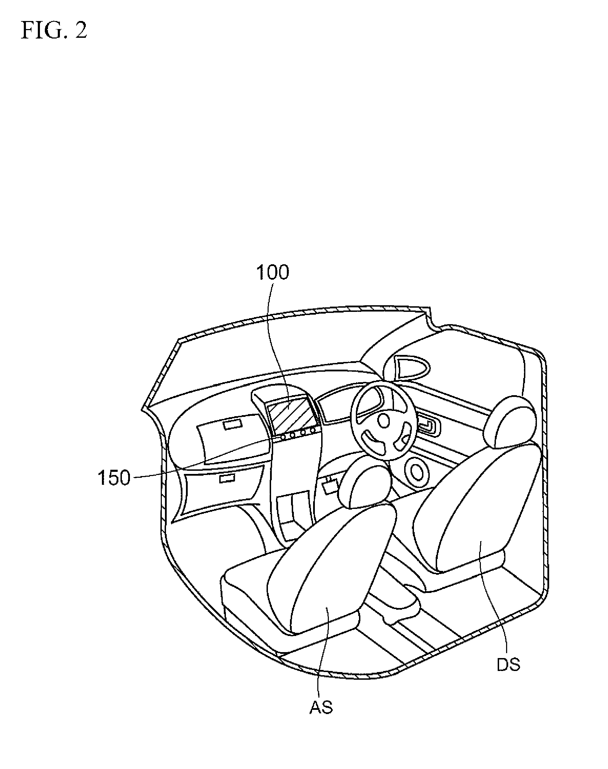

FIG. 2 is a perspective view showing an example in which the in-vehicle display apparatus is applied to a vehicle in accordance with the exemplary embodiment of the present invention.
Referring now to FIG. 2, the display portion 100 is arranged between the driver's seat DS and the front passenger's seat AS in the dashboard area of the vehicle. In addition, the display portion 100 is provided with the operation portion 150 so as to manually operate the in-vehicle display apparatus.
According to an exemplary embodiment shown in FIG. 2, a passenger who sits on the driver's seat DS corresponds to the above-described observer OBR, and another passenger who sits on the front passenger's seat AS corresponds to the above-described observer OBL. Those passengers are able to simultaneously watch individual images, namely, the first image IM1 and the second image IM2, which are respectively different and displayed on the display portion 100, from the driver's seat DS and from the front passenger's seat AS.

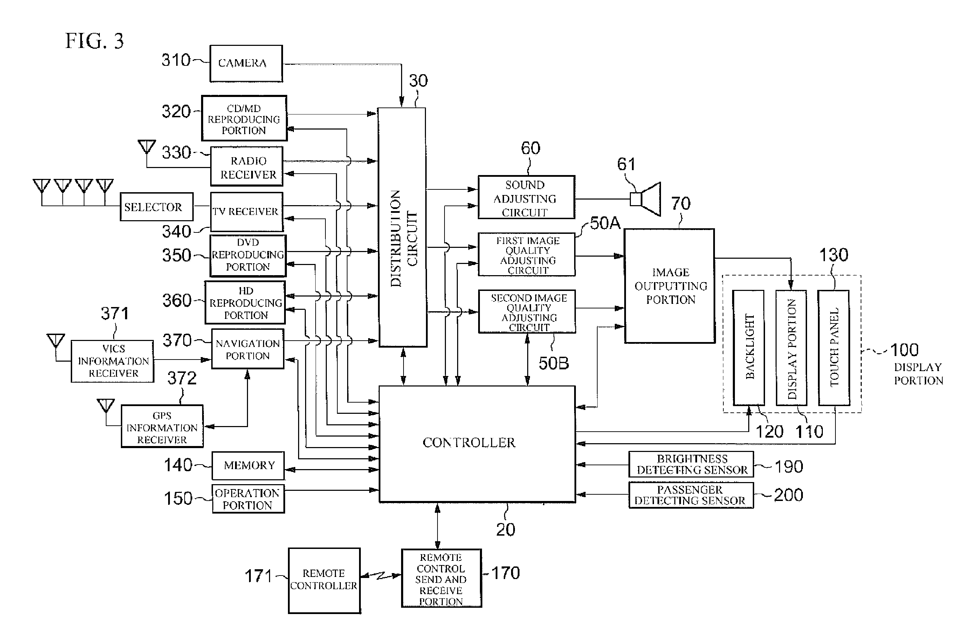

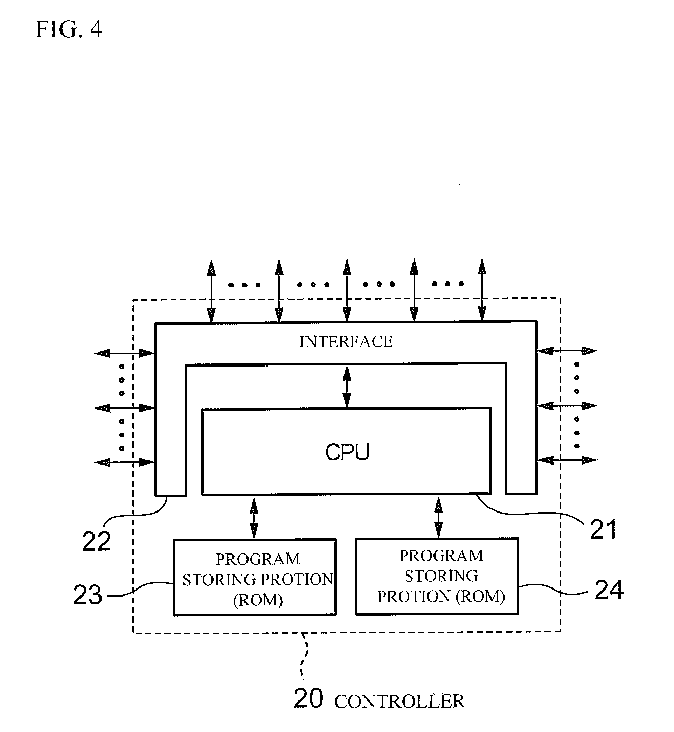

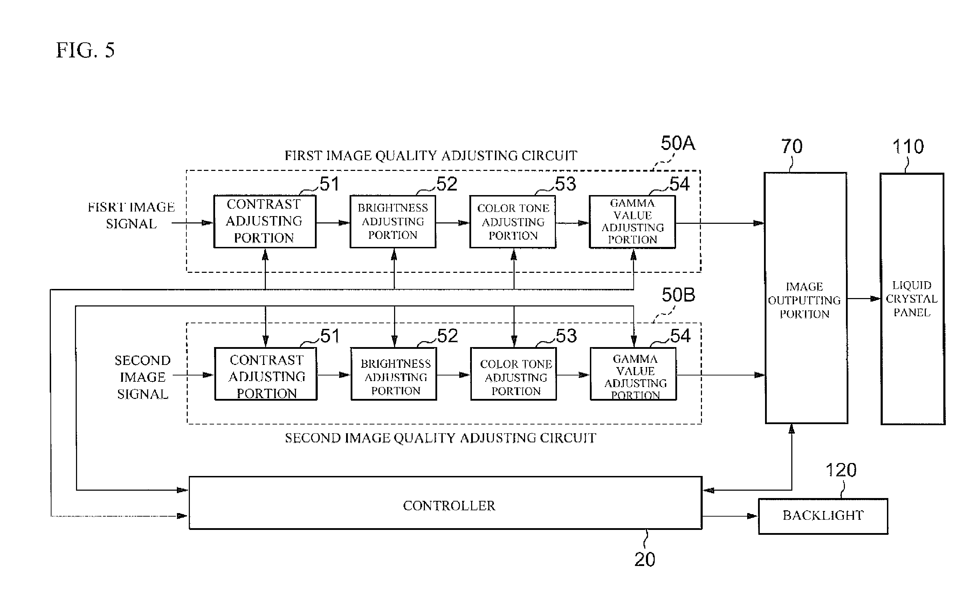

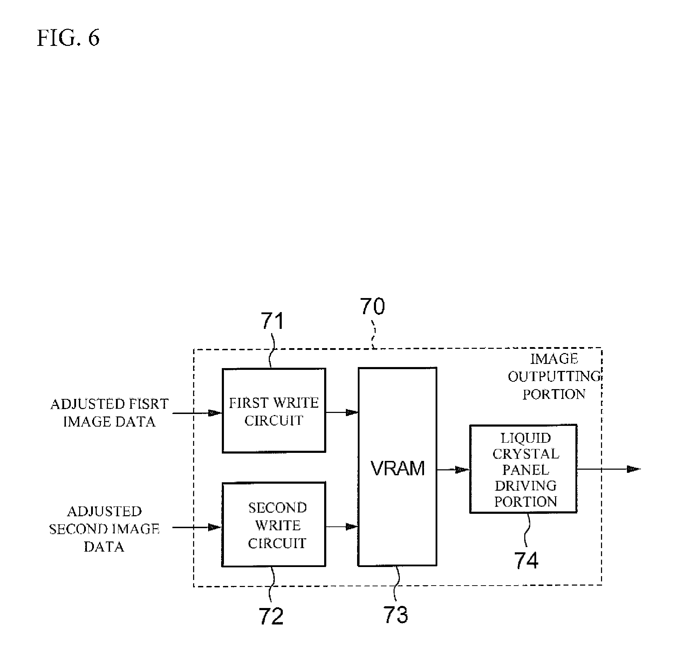

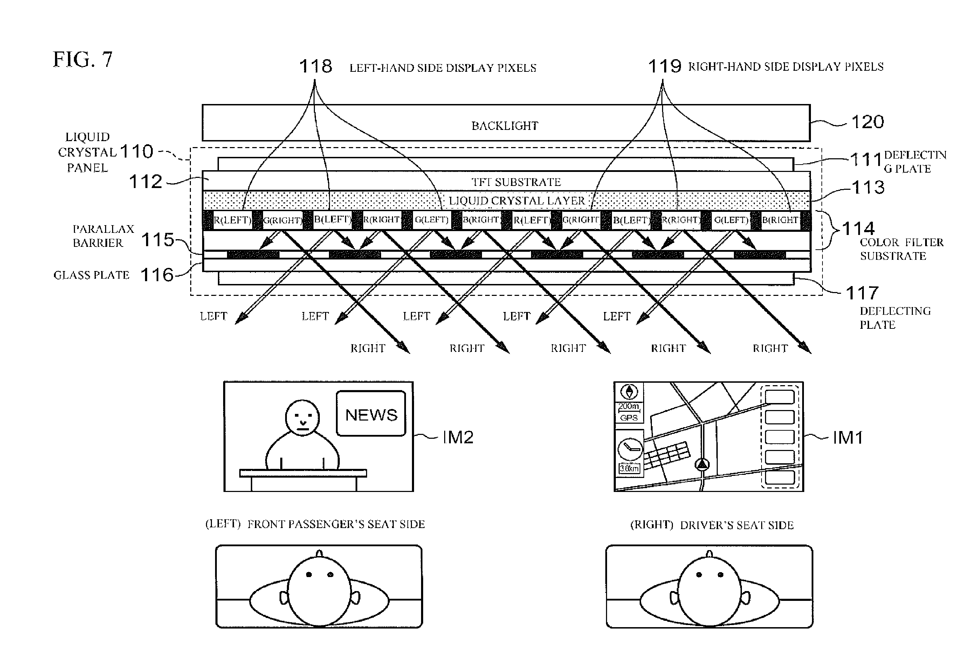

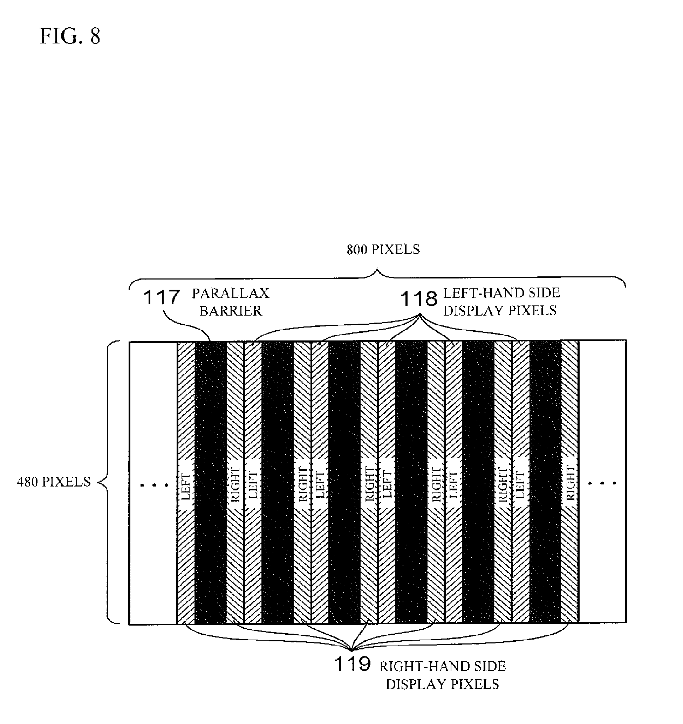

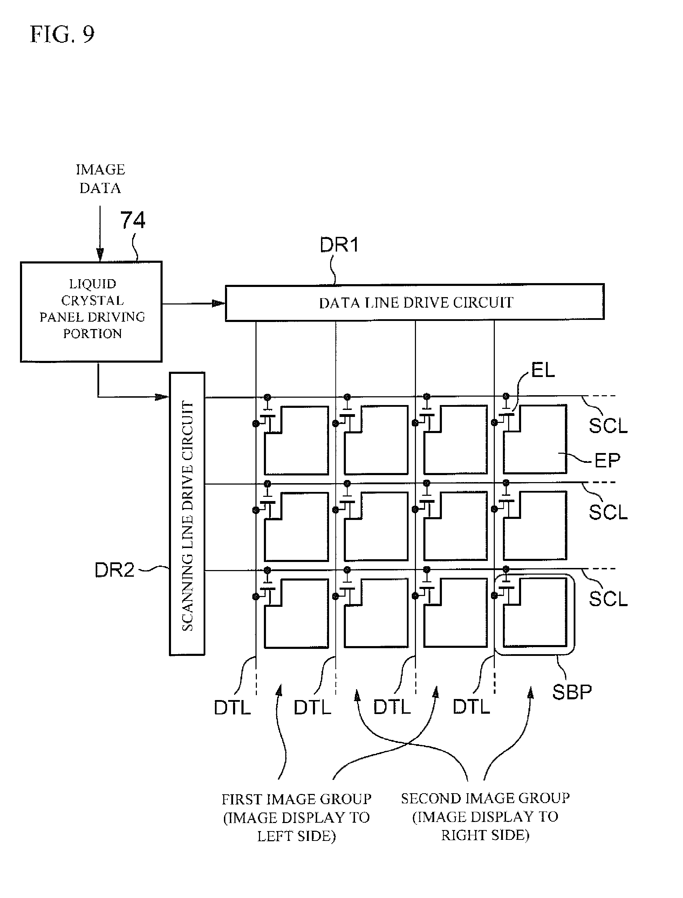

FIG. 3 through FIG. 9 illustrate specific configurations of the in-vehicle display apparatus in accordance with the exemplary embodiment of the present invention. FIG. 3 is a functional block diagram of the in-vehicle display apparatus. FIG. 4 is a functional block diagram showing a configuration of the controller. FIG. 5 is a functional block diagram of first and second image quality adjusting circuits. FIG. 6 is a functional block diagram of an image outputting portion. FIG. 7 is a view illustrating a cross-sectional configuration and effects of a liquid crystal panel. FIG. 8 is a front view of the liquid crystal panel. FIG. 9 is a circuit diagram of a TFT substrate.

Referring now to FIG. 3, the in-vehicle display apparatus includes the display portion 100, a controller 20, a distribution circuit 30, a first image quality adjusting circuit 50A, a second image quality adjusting circuit 50B, an image outputting portion 70, and the like. The display controller 10 includes the controller 20, the distribution circuit 30, the first image quality adjusting circuit 50A, the second image quality adjusting circuit 50B, the image outputting portion 70, and the like.

Referring now to FIG. 4, the controller 20 includes a processor (CPU) 21, an interface 22, a ROM 23, a RAM 24, and the like. The controller 20 controls the in-vehicle display apparatus according to a program stored in the ROM 23 in a comprehensive manner. Also, the controller 20 controls a visible range of the first image IM1 and a visible range of the second image IM2, which are separated from each other by superimposing the first image IM1 and the second image IM2 to be displayed on the display portion 100, by adjusting the image quality of at least one of the first image IM1 and the second image IM2 to have a given range.

The controller 20 is connected to a camera 310, a compact disc/mini disc (CD/MD) reproducing portion 320, a radio receiver 330, a TV receiver 340, a digital versatile disc (DVD) reproducing portion 350, a hard disc (HD) reproducing portion 360, a navigation portion 370, and the like, which are mounted on a vehicle and respectively serve as supply sources supplying images and sounds, as illustrated in FIG. 3. The controller 20 sends and receives data to/from the afore-described components, and controls them. The camera 310 captures images of surroundings and the like of the vehicle. The CD/MD reproducing portion 320 reproduces music or images. The radio receiver 330 receives radio waves via an antenna. The TV receiver 340 receives TV waves via an antenna through a selector 341. The DVD reproducing portion 350 reproduces music information and images in a DVD. The HD reproducing portion 360 reproduces images and music information stored in a HD. The navigation portion 370 outputs maps or route guide images on the basis of road information received by a VICS information receiver 371 and geographic information received by a GPS information receiver 372.

Additionally, the controller 20 is also connected to an external memory 140, the operation portion 150, a remote control send and receive portion 170, a brightness detecting sensor 190, a passenger detecting sensor 200, a illumination switch 210, and the like, and enables various controls on the basis of various kinds of data obtained from the afore-mentioned components. The external memory 140 stores various kinds of data. The operation portion 150 is provided for operating the display apparatus. The remote control send and receive portion 170 sends and receives infrared signals or wireless signals between a remote controller 171 provided for controlling the display apparatus remotely. The brightness detecting sensor 190 is composed of a light switch or a light sensor to detect the brightness inside the vehicle. The passenger detecting sensor 200 is composed of a pressure-sensitive sensor or the like on the driver's seat or the front passenger's seat to detect a passenger in the vehicle.

The distribution circuit 30, as illustrated in FIG. 3, distributes sound data and image data supplied from the above-described camera 310, the CD/MD reproducing portion 320, the radio receiver 330, the TV receiver 340, the DVD reproducing portion 350, the HD reproducing portion 360, the navigation portion 370, and the like, to a sound adjusting circuit 60, the first image quality adjusting circuit 50A or the second image quality adjusting circuit 50B, according to a control instruction issued by the controller 20.

The sound adjusting circuit 60 adjusts the sound data supplied from the distribution circuit 30 to output to a speaker 61, as illustrated in FIG. 3.

The first image quality adjusting circuit 50A and the second image quality adjusting circuit 50B, by reference to FIG. 5, include a contrast adjusting portion 51, a brightness adjusting portion 52, a color tone adjusting portion 53, a gamma value adjusting portion 54, and the like, respectively, and adjust the image qualities (contrast, brightness, color tone, and gamma value) of the first image data and the second image data, respectively, in response to the control instruction issued by the controller 20.

Referring now to FIG. 6, the image outputting portion 70 includes a first write circuit 71, a second write circuit 72, a video RAM (VRAM) 73, a liquid crystal panel driving portion 74, and the like. The first image data and the second image data, image qualities of which have respectively been adjusted by the first image quality adjusting circuit 50A and the second image quality adjusting circuit 50B, are respectively written into the first write circuit 71 and the second write circuit 72. The first write circuit 71 and the second write circuit 72 respectively write the first image data and the second image data, the image qualities of which are respectively adjusted by the first image quality adjusting circuit 50A and the second image quality adjusting circuit 50B, into given addresses of the VRAM 73, in order to superimpose such adjusted first image data and such adjusted second image data.
The VRAM 73 retains the image data on which the first image data and the second image data are superimposed. Such superimposed image data corresponds to respective pixels of the display portion 100.
The liquid crystal panel driving portion 74 is a circuit that drives a liquid crystal panel 110, and also drives the corresponding pixels of the liquid crystal panel 110, on the basis of the superimposed image data retained in the VRAM 73. The liquid crystal panel 110 will be described later in detail.

The display portion 100 includes: the liquid crystal panel 110; a backlight 120; a touch panel 130; and the like, as illustrated in FIG. 3. The backlight 120 sheds illuminated lights from the back surface of the liquid crystal panel 110. The touch panel 130 is provided for inputting a signal to operate the display apparatus. Here, the touch panel 130 is not shown, yet is formed in a shape of transparent sheet and adhered to the front surface of the liquid crystal panel 110. The touch panel 130 will be described later in detail. The touch panel 130 receives operation with respect to the first image and the second image. This enables a user to supply operating instructions with respect to the first image and the second image.

Referring now to FIG. 7, the liquid crystal panel 110 has a well-known structure. Sequentially from the backlight 120, there are provided a first deflecting plate 111, a thin film transistor (TFT) substrate 112, a liquid crystal layer 113, a color filter substrate 114 having pixels for three primary colors of RGB, a parallax barrier 115, a glass plate 116, a second deflecting plate 117, and the like.
The above-described liquid crystal panel 110 has a display screen in which, for example, 800 pixels are arranged in a horizontal direction and 480 pixels in a vertical direction, as illustrated in FIG. 7 and FIG. 8. Also, left-hand side display pixels 118 (hereinafter, also referred to as front passenger's display pixel 118) and right-hand side display pixels 119 (hereinafter, also referred to as driver's display pixel 119) are alternately arranged in a horizontal direction of the display screen.

The parallax barrier 115 is formed in a stripe-shaped manner, and includes shielding portions and transmitting portions, as illustrated in FIG. 7 and FIG. 8. The shielding portions are arranged between the left-hand side display pixels 118 and the adjacent right-hand side display pixels 119. By providing the parallax barrier 115 on the front surface of the color filter substrate 114, among the illuminated lights that have passed through the left-hand side display pixels 118, only the lights going towards the left side selectively pass through the transmitting portions of the parallax barrier 115. Among the illuminated lights that have passed through the right-hand side display pixels 119, only the lights going towards the right side selectively pass through the transmitting portions of the parallax barrier 115. This makes the first image IM1 visible from the right side (the driver's seat) of the liquid crystal panel 110, and also makes the second image IM2 visible from the left side (the front passenger's side), as illustrated in FIG. 7.
Here, a similar parallax barrier as disclosed in Japanese Patent Application Publication No. 10-123461 or Japanese Patent Application Publication No. 11-84131 may be employed for the parallax barrier 115.

The TFT substrate 112, by reference to FIG. 9, includes a data line drive circuit DR1, a scanning line drive circuit DR2, vertically arranged scanning lines SCL, horizontally arranged data lines DTL, TFT elements EL, pixel electrodes EP corresponding to the TFT elements EL, and the like, whereas each of the TFT elements EL is formed in each region where each of the scanning lines SCL and each of the data lines DTL are crossed. Sub pixels SBP are formed by regions surrounded by the scanning lines SCL and the data lines DTL, and the sub pixels SBP arranged along each of the data lines DTL are alternately assigned to the left-hand side display pixels 118 and the right-hand side display pixels 119.
A drive timing of the data line drive circuit DR1 is controlled by the liquid crystal panel driving portion 74 to control a voltage applied to the pixel electrode EP.
A drive timing of the scanning line drive circuit DR2 is controlled by the liquid crystal panel driving portion 74 to selectively scan the TFT element EL.

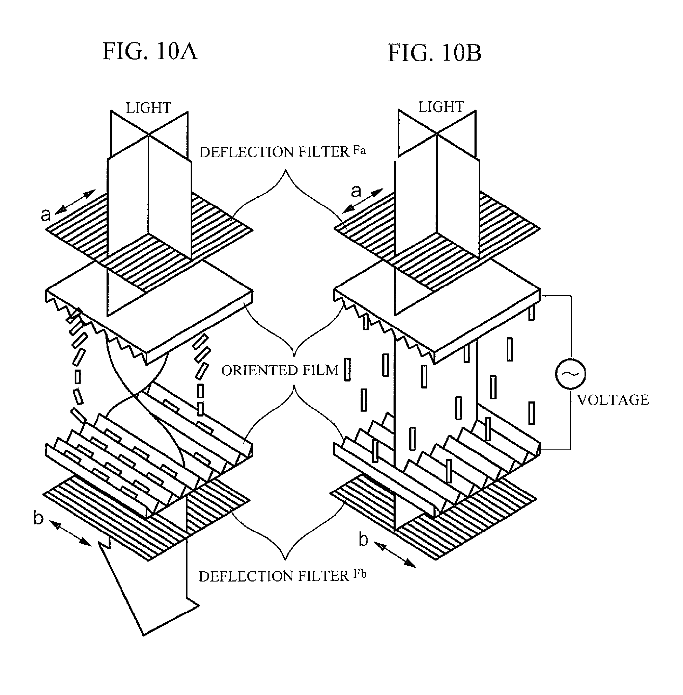

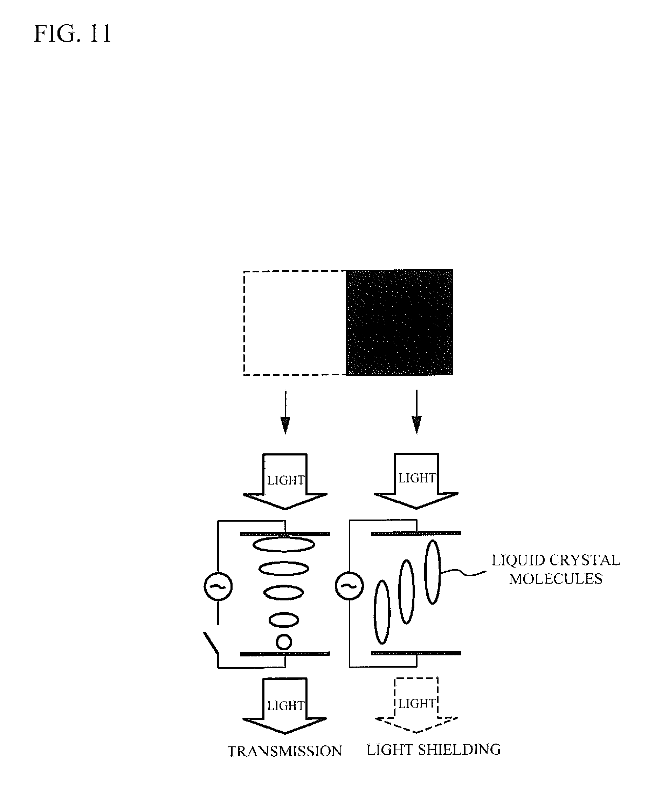

Here, a description will now be given, with reference to FIGs. 10A, 10B and 11, of the principles of driving a TN (Twisted Nematic) type liquid crystal as an example of liquid crystal. As shown in FIG. 10A, in the TN type liquid crystal, twisted liquid crystal is interposed between two deflection filters Fa and Fb (deflection plates) arranged to have mutually orthogonal deflecting directions for preventing light from pass therethrough. Incident light to top of the liquid crystal is guided by the liquid crystal helix and is twisted by 90 degrees. Thus, the light is allowed to pass through the lower deflection filter Fb. As shown in FIG. 10B, when a voltage is applied to the liquid crystal molecules, the molecules are caused to stand upright and are released from the twisted state. Thus, the incident light goes downwards without any change, and is prevented from passing through the lower filter Fb. That is, as shown in FIG. 11, light is allowed to pass through the liquid crystal when no voltage is applied to the liquid crystal molecules, and is blocked so that the screen is black when the voltage is applied. The liquid crystal functions as a shutter responsive to the voltage applied thereto. Thus, brightness control can be implemented by controlling the voltage applied to the liquid crystal. Further, brightness control of images on the left-side and right-side display portions can be implemented independently by separately controlling the voltages applied to liquid crystals respectively for the left-side and right-side display images.

The memory 140 may be formed by an electrically programmable and erasable memory such as a flash memory or a battery-backup volatile memory, and stores data necessary for control by the controller 20. More specifically, the memory 140 stores setting information for setting visible ranges that will be described later, and vehicle information about the steering wheel position of the vehicle.

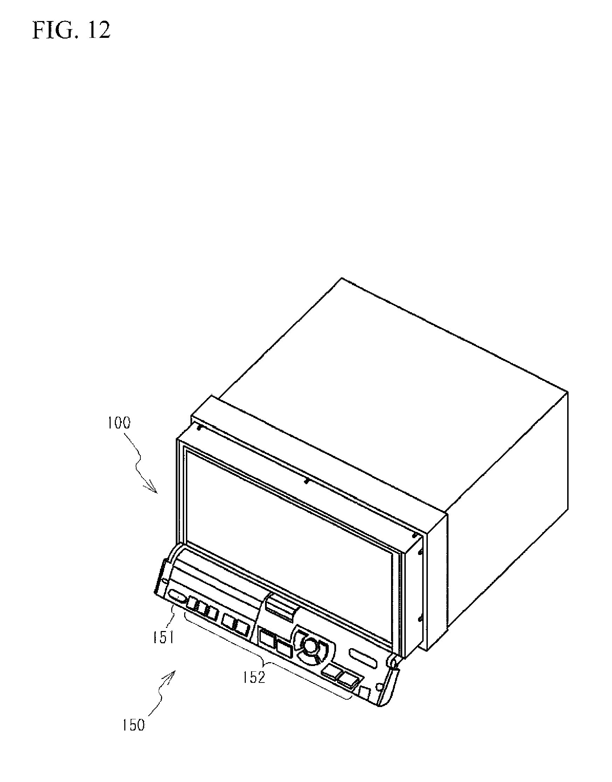

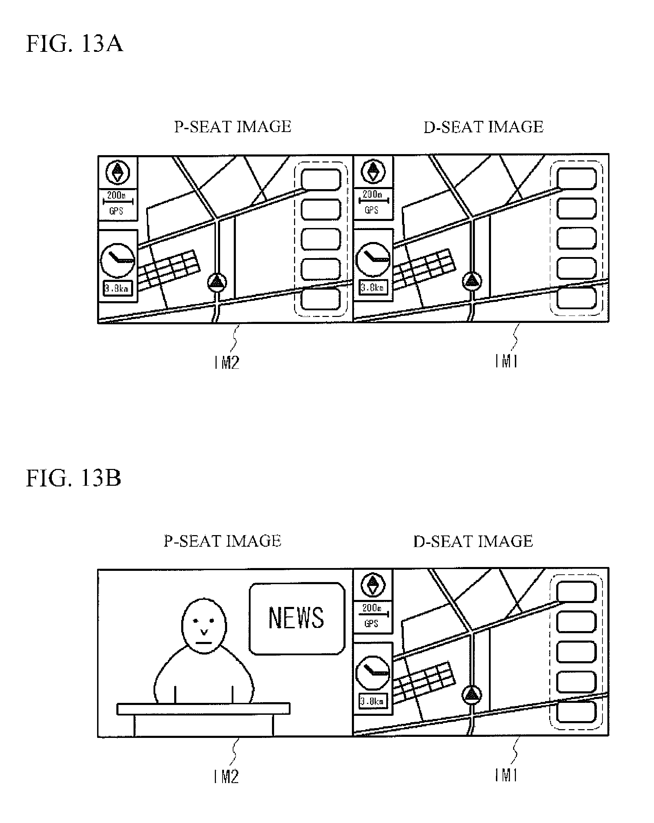

Next, a description will be given, with reference to FIG. 12, of a switching button.
FIG. 12 is a perspective view of the in-vehicle display apparatus. The operation portion 150 is composed of a switching button (a common operation portion) 151, an operation button group 152, and so on, as shown in FIG. 12.
The operation button group 152 is composed of a plurality of buttons for executing setting of a destination in the navigation, operation of the volume, and so on.
The switching button 151 is operated, so that the switching button 151 switches between a single display mode and a dual display mode.
Here, when the first image source 300A and the second image source 300B are the same, the single display mode is in a state where the same images based on a single image source are displayed on the first and second screens. For example, an instruction input and operated by the operation button group 152 is reflected in an image displayed on both screens. That is, when displaying TV image is instructed via the operation button group 152, the TV image is displayed on the first and second screens.
When the first image source 300A and the second image source 300B are the different sources, the dual display mode is in a state where the first image IM1 (driver's seat side image; hereinafter, also referred to as D-seat image) and the second image (front passenger's seat side image; hereinafter, also referred to as P-seat image) are displayed on the first and second screens based on the different image sources or the same image source, respectively. In the dual display mode, there is the case where the D-seat image and the P-seat image are the same, but the dual display mode is different from the single display mode in that operation for each image can be executed separately.
For example, in the state of the single display mode, as shown in FIG. 13A, the D-seat image and the P-seat image are displayed as the same navigation images. In the state of the dual display mode, as shown in FIG. 13B, a navigation image is displayed as the D-seat image, and the TV image is displayed as the P-seat image.
Further, in the state of the dual display mode, not shown, if the TV images are displayed as the D-seat image and the P-seat image, outputting the D-seat image is restricted and the TV image is directly displayed as the P-seat image during a given restriction (audiovisual restriction of moving image at the time of the vehicle diving).

Accordingly, the switching button 151 switches between the single display mode in which the same images based on the same image source are displayed on the first and second screens, and the dual display mode in which the D-seat image and the P-seat image based on the difference image sources or the same image source can be displayed on the first and second screens, respectively. This makes it possible to switch between the case where the same images are displayed on the first and second screens and the case where different images are displayed on the first and second screens according to user's request.

Moreover, in a state where the dual display mode is selected, the switching button 151 switches between a first operating mode which permits operation with respect to the D-seat image caused to be displayed on the first screen, and a second operating mode which permits operation with respect to the P-seat image caused to be displayed on the second screen.
The first operating mode is in a state where, for instance, the user presses the operation button group 152, or the touch panel 130 of the display portion 100, so that the operation with respect to the D-seat image can be executed. Similarly, the second operating mode is in a state where, for instance, the user presses the operation button group 152, or the touch panel 130 of the display portion 100, so that the operation with respect to the P-seat image can be executed.
Therefore, with this configuration, it is possible to operate only any one of the D-seat and P-seat images even when a common means provides an operating instruction relating to the D-seat image or the P-seat image. As a result, the user can execute only operation with respect to a desired image.
Specifically, in the in-vehicle display apparatus of exemplary embodiment of the present invention, the D-seat image can be watched from the driver's seat side, but cannot be watched from the front passenger's seat side. Further, the P-seat image can be watched from the front passenger's seat side, but cannot be watched from the driver's seat side. Therefore, even if the operation with respect to the D-seat image is executed from the driver's seat side, the driver does not recognize the state of the operation. Moreover, in the in-vehicle display apparatus, the operation portion 150 has a characteristic in which it is installed in the vehicle, and hence a large space for the operation portion 150 cannot be provided in the vehicle. Therefore, it is difficult to provide operation portions separately providing respective operating instructions to the P-seat image and the D-seat image.
Since the display portion 100 is common to both images, the touch panel 130 can be simultaneously operated with respect to both images. However, it is impossible to determine whether the operation is operation for either image, and hence it is difficult to operate only any one of images. As a result, as described above, the switching button 151 capable of switching between the first operating mode and the second operating mode is provided, so that such a problem can be solved.

Further, as described above, when the switching button 151 is operated, the switching button 151 can switch between the single display mode and the dual display mode. In addition, the switching button 151 can switch between the first operating mode and the second operating mode. Thus, the button switching between the display modes is used together as the button switching between the operating modes. This enables the user to switch easily between a plurality of modes, i.e., the single display mode, the dual display mode, the first operating mode, and the second operating mode with the single button.

A light source (lighting portion, not shown) is disposed on a rear side of the switching button 151, and the switching button 151 is formed so as to be capable of turning on itself. This enables the user to easily grasp the position of the switching button 151. More specifically, the switching button 151 is formed integrally with the lighting portion in which a lighting state is changed depending on the type of the switched mode (i.e., the type of the display modes, or the type of operating modes). This enables the user to easily distinguish the states of the modes. The states of the modes will be described below in further detail.

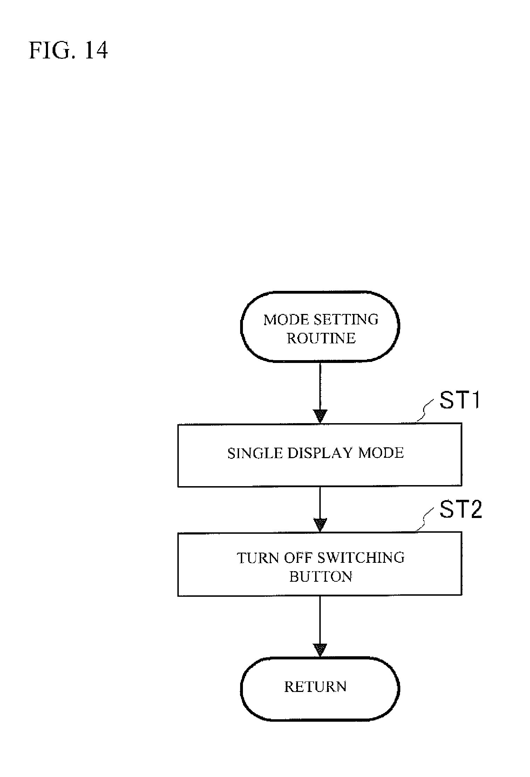

Next, a description will be given, with reference to FIG. 14, of an example of a startup process of the in-vehicle display apparatus executed by the controller 20. Here, FIG. 14 is a flowchart showing an example of a startup process of the in-vehicle display apparatus executed by the controller 20. This process is executed immediately after a power supply of the in-vehicle display apparatus is turned on.
On startup of the in-vehicle display apparatus, the controller 20 outputs a command to the distribution circuit 30 and sets to the single display mode (step ST1), and then sets the switching button 151 to a turning-off state (step ST2).

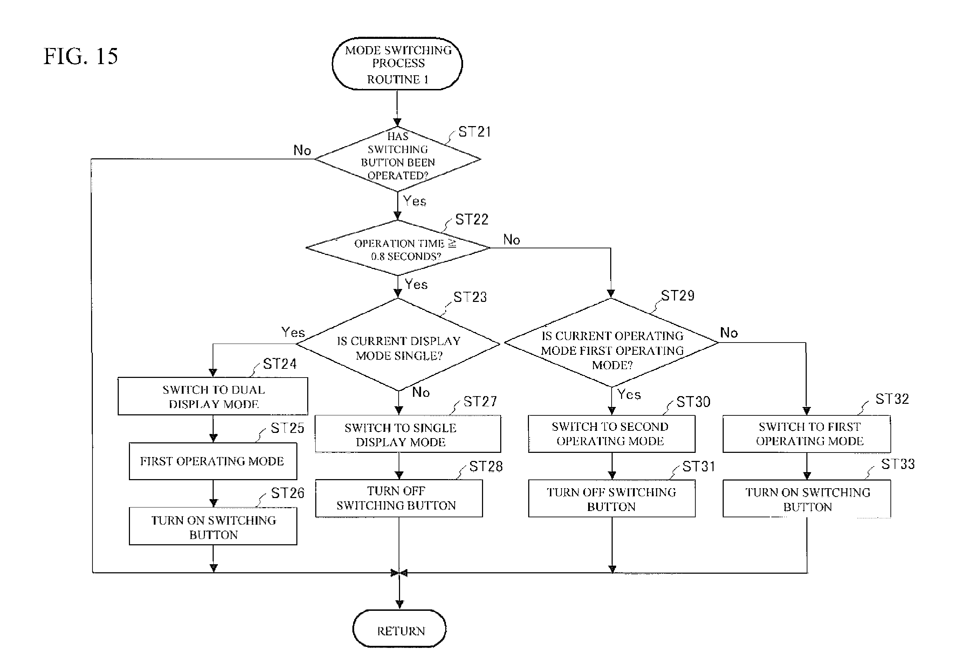

Next, a description will be given, with reference to FIG. 15, of an example of a mode switching process executed by the controller 20. Here, FIG. 15 is a flowchart showing an example of a mode switching process executed by the controller 20. This process is repeatedly executed during activation of the in-vehicle display apparatus.
The controller 20 determines whether the switching button 151 has been operated based on a signal of the switching button 151 (step ST21). When the switching button 151 has not been operated, the series of procedures are terminated.
When the switching button 151 has not been operated, the controller 20 determines whether a time period for long pressing operation of the switching button 151 is more than 0.8 seconds (step ST22). When the long pressing operation of the switching button 151 is executed for a time period more than 0.8 seconds, the controller 20 determines whether a current set display mode is the single display mode (step ST23). When the current set display mode is the single display mode, the controller 20 switches the single display mode to the dual display mode (step ST24), sets to the first operating mode (step ST25), and turns on the switching button 151 (step ST26). The series of procedures are terminated.
When the current set display mode is not the single display mode, i.e., the dual display mode is set, the controller 20 switches the dual display mode to the single display mode (step ST27), turns off the switching button 151 (step ST28), and terminates the series of procedures.

When short pressing operation of the switching button 151 is executed for a time period less than 0.8 seconds, the controller 20 determines whether a current set operating mode is the first operating mode (step ST29). When the current set operating mode is the first operating mode, the controller 20 switches the first operating mode to the second operating mode (step ST30), turns off the switching button 151 (step ST31), and terminates the series of procedures.
When the current set operating mode is not the first operating mode, i.e., but the second operating mode, the controller 20 switches the second operating mode to the first operating mode (step ST32), and turns on the switching button 151 (step ST33), terminates the series of procedures.

Thus, the switching button 151 is turned on, turned off, or blinked depending on the type of switched mode. With this configuration, by confirming that the state of the display mode switching button is in a turning-on state, a turning-off state, or a blinking state, the user can distinguish the states of the modes in detail.
It should be noted that, as shown in FIG. 15, in processes switching the operation mode (steps ST31 and ST32), the switched operation mode may be stored in the data storing portion 24.

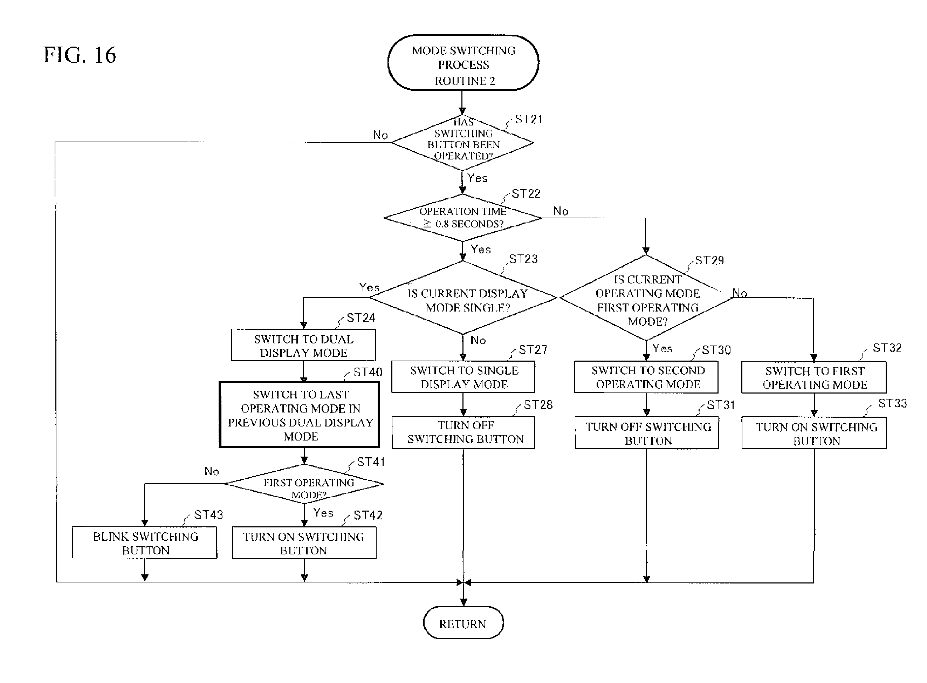

Next, a description will be given, with reference to FIG. 16, of a first variation of the mode switching process executed by the controller 20. Here, FIG. 16 is a flowchart showing a first variation of the mode switching process executed by the controller 20. It should be noted that description of the same process as the flowchart shown in FIG. 15 is omitted.

When the long pressing operation of the switching button 151 is executed for a time period more than 0.8 seconds, and the current set display mode is the single display mode, the controller 20 switches the single display mode to the dual display mode (step ST24), and switches it to the last operating mode in the previous dual display mode (step ST40). That is, when the first operating mode is set in the previous dual display mode, the controller 20 switches the current operating mode to the first operating mode, and when the second operating mode is set in the previous dual display mode, the controller 20 switches the current operating mode to the second operating mode.
Next, the controller 20 determines whether the switched operating mode is the first operating mode (step ST41). When the switched operating mode is the first operating mode, the controller 20 turns on the switching button 151 (step ST42), and terminates the series of procedures. When the switched operating mode is the second operating mode, the controller 20 blinks the switching button 151 (step ST43), and terminates the series of procedures.

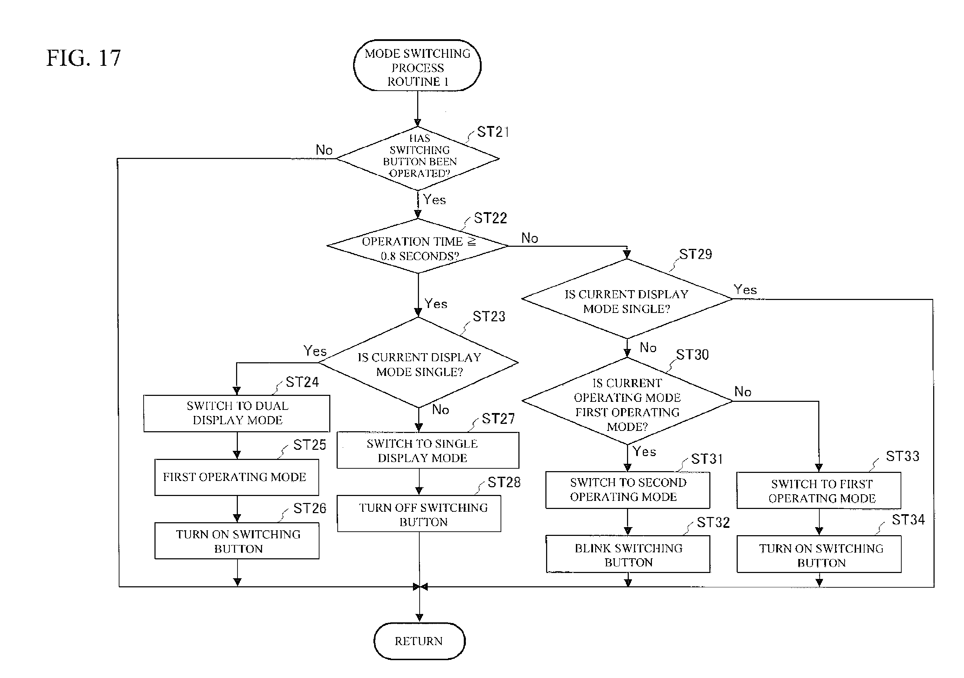

Next, a description will be given, with reference to FIG. 17, of a second variation of the mode switching process executed by the controller 20. Here, FIG. 17 is a flowchart showing a second variation of the mode switching process executed by the controller 20. It should be noted that description of the same process as the flowchart shown in FIG. 15 is omitted.

When the short pressing operation of the switching button 151 is executed for a time period less than 0.8 seconds, the controller 20 determines whether the current set display mode is the single display mode (step ST29). When the current set display mode is the single display mode, the series of procedures are terminated. When the current set display mode is the dual display mode, the controller 20 determines whether the current set operating mode is the first operating mode (step ST30). When the current set operating mode is the first operating mode, the controller 20 switches the first operating mode to the second operating mode (step ST31), turns off the switching button 151 (step ST32), terminates the series of procedures.
When the current set operating mode is not the first operating mode but the second operating mode, the controller 20 switches the second operating mode to the first operating mode (step ST33), turns on the switching button 151 (step ST34), terminates the series of procedures.

Next, a description will be given of operation to the in-vehicle display apparatus when a driving restriction process is executed.

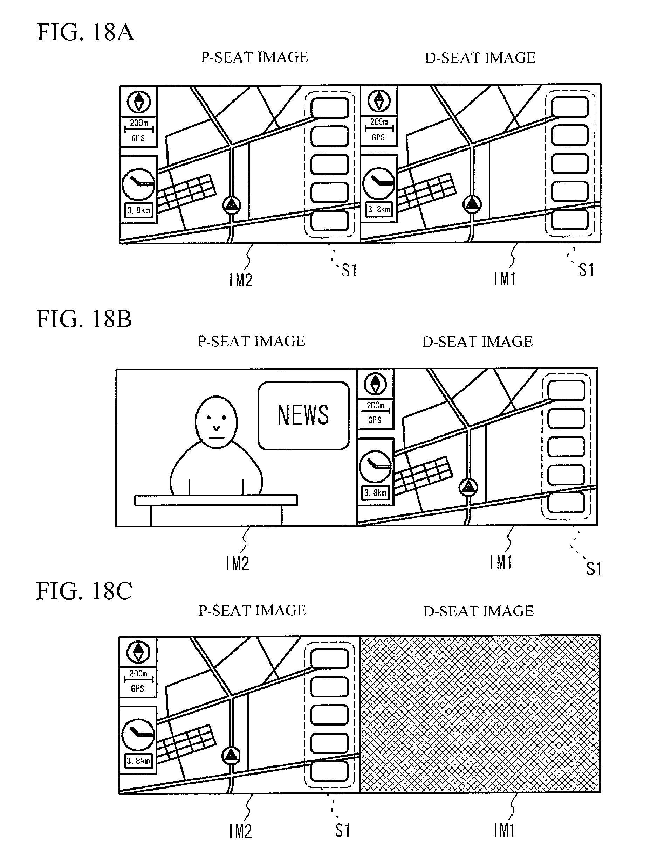

FIGs. 18A to 18C are views describing operation to the in-vehicle display apparatus when the driving restriction process is executed.
The driving restriction process is a process that does not accept operation to the in-vehicle display apparatus while the vehicle is moving, and prevents lack of cohesion of the concentration to driving by the operation to the in-vehicle display apparatus executed by the driver while the vehicle is moving. The driving restriction process is not executed when a shift lever is shift to a parking range, or the vehicle is moving at low speed.

FIG. 18A is a view illustrating the D-seat image and the P-seat image displayed on the display portion 100 in the case of the single display mode. For example, when the process of step ST27 shown in FIG. 17 is executed, and the current set display mode is the single display mode, the same images are displayed as the D-seat image and the P-seat image. In addition, each operating switch group S1 is displayed on the D-seat image and the P-seat image.
When the driving restriction process is executed, even if the driver operates the operating switch group S1, the in-vehicle display apparatus does not accept the operation. Therefore, it is possible to prevent reduction of the concentration of the driver while the vehicle is moving.

FIG. 18B is a view illustrating the D-seat image and the P-seat image displayed on the display portion 100 in the case of the dual display mode. Different images are displayed as the D-seat image and the P-seat image.
For example, when the process of step ST33 shown in FIG. 17 is executed, and the current set operating mode is switched to the first operating mode, the in-vehicle display apparatus does not accept operation to a D-seat screen while executing the driving restriction process.

FIG. 18C is a view illustrating the D-seat screen and the P-seat screen displayed on the display portion 100 in the case where the current set operating mode is switched to the second operating mode in the dual display mode.
For example, when the process of step ST31 shown in FIG. 17 is executed, the current set operating mode is switched to the second operating mode in the case of the dual display mode, and the driving restriction process is executed, a restriction image which does not permit operation to the D-seat screen is displayed on the D-seat screen. The restriction screen is a still image or a whole-colored image.
On the contrary, a navigation image is displayed on the P-seat screen in such a manner that the operating switch group S1 is operable.
Accordingly, as shown in FIG.18B, when the first operating mode is selected in the case of the dual display mode, and the driving restriction process is executed, the driver cannot execute operation to the D-seat screen. However, the switching button 151 is operated to switch the first operating mode to the second operating mode, so that the passenger of the front passenger's seat can execute operation on behalf of operation of the driver. Therefore, it is possible to prevent lack of cohesion of the concentration of the driver while the vehicle is moving. Further, the passenger of the front passenger's seat can operate the in-vehicle display apparatus on behalf of the driver.

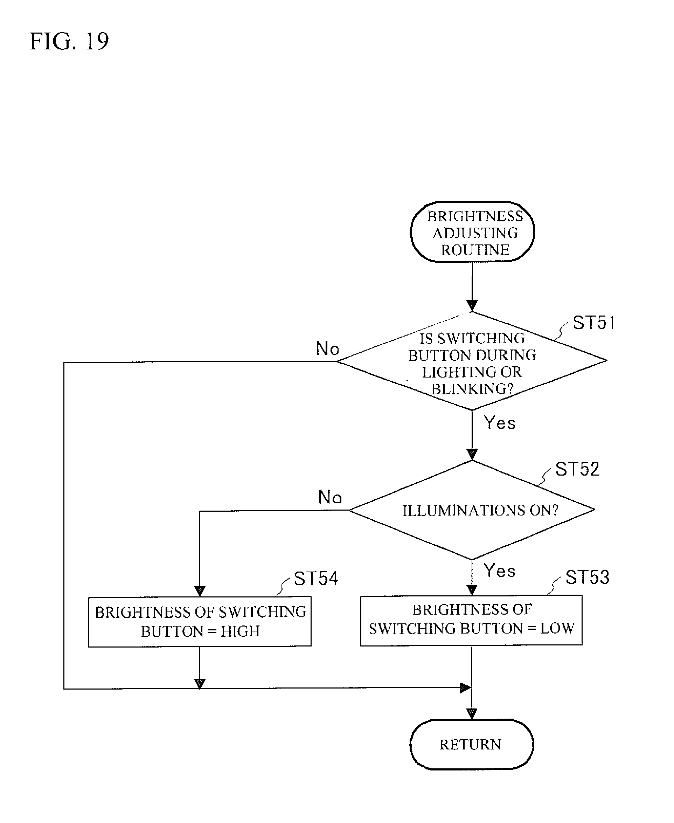

Next, a description will be given, with reference to FIG. 19, of an example of a brightness adjusting process of the switching button 151 executed by the controller 20. Here, FIG. 19 is a flowchart showing an example of a brightness adjusting process of the switching button 151 executed by the controller 20. This process is repeatedly executed during activation of the in-vehicle display apparatus.

The controller 20 determines whether the switching button is during lighting or blinking (step ST51). When the switching button is not during lighting or blinking, the series of procedures are terminated.
When the switching button is during lighting or blinking, the controller 20 determines whether the illuminations in the vehicle are turned on (step ST52). When it is determined that the illuminations are in a state of turning-on, the controller 20 sets brightness of the switching button 151 at a low level (step ST53).
On the contrary, when it is determined that the illuminations are in a state of turning-off, the controller 20 sets brightness of the switching button 151 at a high level (normal state) (step ST54).
Thus, the brightness of the switching button 151 during lighting is automatically adjusted according to brightness in the vehicle. This enables the user to easily grasp the position of the switching button 151 without being affected by the brightness in the vehicle, and to easily distinguish the states of the modes.
The brightness detecting sensor 190 detects the brightness in the vehicle depending on a state of turning-on or turning-off of the illuminations installed in the vehicle, but it is not limited to such a configuration.

Next, a description will be given of a position where the switching button 151 is provided. The switching button 151 is provided in the vicinity of the display portion 100, as shown in FIG. 12. This enables both of the driver watching the D-seat image and the passenger of the front passenger's seat watching the P-seat image to easily grasp the position of the switching button 151.

In the above-described exemplary embodiment, although the switching button 151 is used as a button switching between the display modes and a button switching between the operating modes, the button switching between the display modes and the button switching between the operating modes may be provided separately.
Further, in the above-described exemplary embodiment, although the state of the mode is informed by the lighting state of the switching button 151, an exclusive indicator informing the state of the mode of the switching button 151 may be provided.

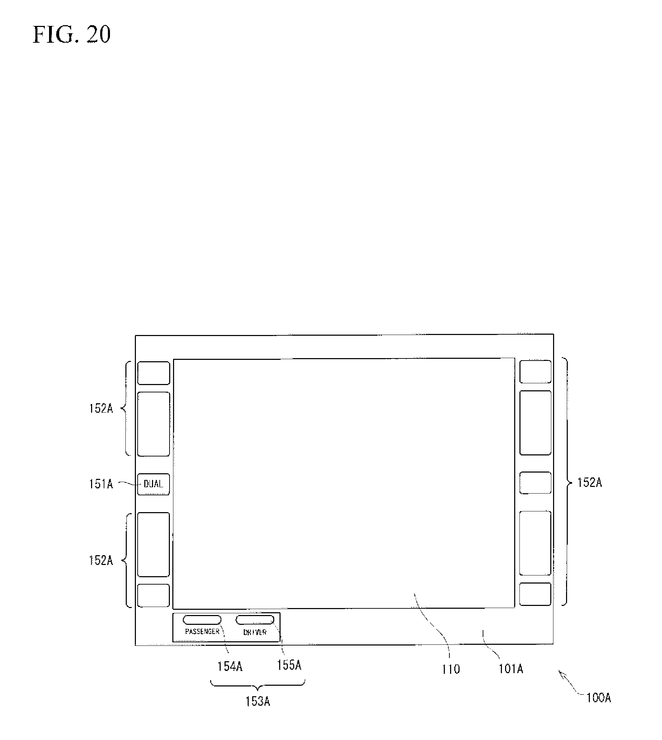

Next, a description will be given, with reference to FIG. 20, of the in-vehicle display apparatus in accordance with a first variation. A basic configuration of the in-vehicle display apparatus in accordance with the first variation is identical with that of the above-described in-vehicle display apparatus. Therefore, corresponding elements to those in the above-described exemplary embodiment are designated by identical references, and the repeated description thereof is omitted.
FIG. 20 is a front view of a display portion 100A of the in-vehicle display apparatus in accordance with the first variation.
The display portion 100A is composed of the liquid crystal panel 110 and a cover portion 101A for covering the liquid crystal panel. The cover portion 101A is provided with a switching button 151A and other operating button group 152A. In addition, the cover portion 101A is provided with an indicator 153A informing the types of the display mode and the operating mode. The indicator 153A is composed of a passenger indicator 154A and a driver indicator 155A.

The switching button 151A is operated, so that it is possible to switch between the display mode and the operating mode. The lighting state of the indicator 153A is changed depending on the switched display mode and the switched operating mode.
Particularly, when the mode is the single display mode, the passenger indicator 154A and the driver indicator 155A become the turning-off state. When the mode is the first operating mode in the dual display mode, the driver indicator 155A is turned on, and the passenger indicator 154A becomes the turning-off state. When the mode is the second operating mode, the passenger indicator 154A is turned on, and the driver indicator 155A becomes the turning-off state.
Thus, the switching means for switching between the display mode and the operating mode, and the lighting portion in which the lighting state is changed depending on the display mode and the operating mode may be provided separately.

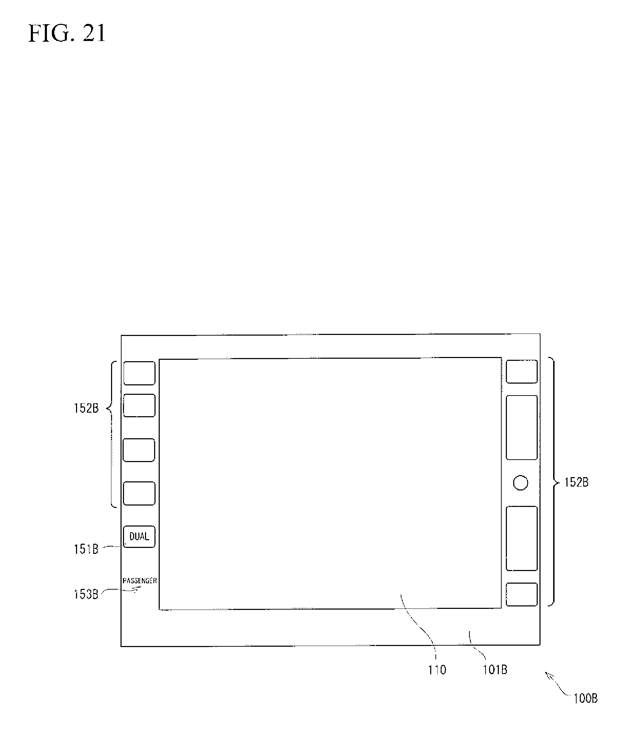

Next, a description will be given, with reference to FIG. 21, of the in-vehicle display apparatus in accordance with a second variation. A basic configuration of the in-vehicle display apparatus in accordance with the third embodiment is identical with that of the above-described in-vehicle display apparatus. Therefore, corresponding elements to those in the above-described exemplary embodiment are designated by identical references, and the repeated description thereof is omitted.
FIG. 21 is a front view of a display portion 100B of the in-vehicle display apparatus in accordance with the second variation.
The display portion 100B is composed of the liquid crystal panel 110 and a cover portion 101B for covering the liquid crystal panel. The cover portion 101B is provided with a switching button 151B and other operating button group 152B. In addition, the cover portion 101B is provided with an indicator 153B informing the types of the display mode and the operating mode.

The switching button 151B is operated, so that it is possible to switch between the display mode and the operating mode. The lighting state of the indicator 153B is changed depending on the switched display mode and the switched operating mode.
Particularly, when the mode is the single display mode, the indicator 153B is turned off. When the mode is the first operating mode in the dual display mode, the indicator 153B is turned on. When the mode is the second operating mode, the indicator 153B becomes the blinking state.
Thus, the switching means for switching between the display mode and the operating mode, and the lighting portion in which the lighting state is changed depending on the display mode and the operating mode may be provided separately.

The above-mentioned embodiment is exemplary preferred embodiment. The present invention is not limited to the above embodiment but various variations may be made without departing from the present invention.

## Claims

1. An in-vehicle display apparatus comprising:
a display control means that causes first and second images to be displayed on a common display unit, the first and second images being capable of being watched from first and second viewing directions, respectively;
a display mode switching means that switches between a single display mode displaying images on the basis of a common image source on the display unit, and a dual display mode displaying the first and second images on the basis of different image sources or the same image source on the display unit so that the first and second images are capable of being watched from the first and second viewing directions, respectively; and
an operating mode switching means that switches between a first operating mode which permits to operate the first image, and a second operating mode which permits to operate the second image;
wherein the display mode switching means and the operating mode switching means include a common operating unit.

2. The in-vehicle display apparatus as claimed in claim 1, wherein the display mode switching means switches between the single display mode and the dual display mode when a time period for operation to the operating unit is more than a given time period, and
the operating mode switching means switches between the first operating mode and the second operating mode when the time period for operation is less than the given time period in the dual display mode.

3. The in-vehicle display apparatus as claimed in claim 1 or 2, wherein the first viewing direction is a driver's seat direction, and the second viewing direction is a front passenger's seat direction.

4. The in-vehicle display apparatus as claimed in any of claims 1 to 3, wherein the first image is a navigation image, and the second image is a television image.

5. The in-vehicle display apparatus as claimed in claim 2, wherein the given time period is 0.8 seconds.

6. The in-vehicle display apparatus as claimed in any of claims 1 to 5, further comprising a lighting portion that changes a lighting state depending on a set type of the single display mode and the dual display mode and/or a set type of the first operating mode and the second operating mode.

7. The in-vehicle display apparatus as claimed in claim 6, wherein the lighting portion is formed integrally with the display mode switching means and/or the operating mode switching means.

8. The in-vehicle display apparatus as claimed in claim 6 or 7, wherein the lighting portion is turned on, turned off, blinked depending on a set type of the single display mode and the dual display mode and/or a set type of the first operating mode and the second operating mode.

9. The in-vehicle display apparatus as claimed in any of claims 6 to 8, wherein the lighting portion is turned off when a setting mode is the single display mode, the lighting portion is turned on when the setting mode is the first operating mode, the lighting portion is blinked when the setting mode is the second operating mode.

10. The in-vehicle display apparatus as claimed in any of claims 6 to 9, wherein brightness of the lighting portion during lighting is automatically adjusted according to brightness in a vehicle.
